# EUROPÄISCHE PATENTSCHRIFT

(11) **EP 0 850 019 B1**
(45) Veröffentlichungstag und Bekanntmachung des Hinweises auf die Patenterteilung: **28.07.1999**
(21) Anmeldenummer: 96931776.7
(22) Anmeldetag: 06.09.1996
(51) Int. Cl.: A61B 5/117, G06K 9/20

(54) **VERFAHREN UND VORRICHTUNG ZUR STRUKTURANALYSE UND/ODER ZUR LAGEERKENNUNG VON SCHICHTFÖRMIGEN OBJEKTEN**
METHOD AND DEVICE FOR THE STRUCTURE ANALYSIS AND/OR FOR DETECTING THE POSITION OF LAYERED OBJECTS
PROCEDE ET DISPOSITIF POUR L'ANALYSE STRUCTURALE ET/OU LA RECONNAISSANCE DE LA POSITION D'OBJETS EN COUCHES

(30) Priorität: 07.09.1995 DE 19533007; 06.09.1996 DE 19636124
(43) Veröffentlichungstag der Anmeldung: 01.07.1998
(73) Patentinhaber: Sonident Anstalt, 9490 Vaduz (LI)
(72) Erfinder: BICZ, Wieslaw, PL-52-011 Wroclaw (PL)
(74) Vertreter: Funck-Hartherz, Anna-Eleonore, Dipl.-Phys.
(86) Internationale Anmeldenummer: EP9603916
(87) Internationale Veröffentlichungsnummer: WO9708990

(56) Entgegenhaltungen:
- EP-A- 0 179 327
- WO-A-92/09050
- PATENT ABSTRACTS OF JAPAN vol. 014, no. 482 (P-1119), 19.Oktober 1990 & JP,A,02 195289 (MATSUSHITA ELECTRIC IND CO LTD), 1.August 1990,

## Beschreibung

Die Erfindung bezieht sich auf eine Vorrichtung zur Strukturanalyse und/oder zur Lageerkennung von schichtförmigen Objekten mittels Ultraschallwellen mit einem oder mehreren Ultraschallsendern und Ultraschallempfängern sowie einer Auflagefläche für das Objekt.

Vorrichtungen, die die Struktur von schichtförmigen Objekten mittels Ultraschall analysieren, sind bereits bekannt, wie das EP 0 262 186 zeigt. Die bekannten Vorrichtungen basieren auf der Grundlage der Reflexionstomographie. Dieses Prinzip, angewandt auf Fingerabdrücke gemäß der vorgenannten EP, wurde in dem Vortrag "Ultrasonic setup for fingerprint pattern detection and evaluation" auf der Konferenz der Accustical Imaging 1995 in Florenz vorgestellt und wird in den diesbezüglichen Proceedings publiziert. Bei den bekannten Ausführungen wird das auf einer Auflageplatte befindliche Objekt von einem gegenüberliegend in einem, geschlossenen mit Flüssigkeit gefüllten Gehäuse angeordneten Sender beschallt. Entweder sind mehrere Sender und mehrere Empfänger auf der der Auflagefläche gegenüberliegenden Wand des Gehäuses angeordnet oder der Sender und auch der Empfänger sind an einem Träger auf einer Trajektorie beweglich. Auf diese Weise wird die Fingerkuppe oder jedes andere Objekt an jeder Stelle der Auflageplatte erfaßt. Die vom Objekt reflektierten und rückgestreuten Wellen werden con einem der Empfänger aufgenommen, der die Information über die Intensität und/oder Phase der Rückstreuung und der Reflexion, gegebenenfalls über einen Verstärker, eine Zeitsteuerung, eventuell auch einen Detektor einem Computer zur Analyse und Aufzeichnung eingibt.

Die Ultraschallwellen, die dabei den Finger oder andere Objekte beschallen, sind von dem oder den Sender/n ausgehende Volumenwellen und in gleicher Weise auch die rückgestreuten und reflektierten Schallwellen, die sich im Bereich von 2 MHz und oaberhalb davon bewegen.

Es hat sich gezeigt, daß Vorrichtungen der bekannten Art sehr kompliziert in der Herstellung sind und zwar insbesondere deshalb, weil das Gehäuse mit Flüssigkeit gefüllt ist. Dadurch muß eine vollständige Abdichtung des Gehäuses gegeben sein, und die Anordnung der Wandler in der Flüssigkeit bringt ebenfalls Probleme mit sich. Darüber hinaus sind diese Vorrichtungen wegen des mit Flüssigkeit gefüllten Gehäuses und der Verwendung von Volumenwellen relativ umfangreich, da eine gewisse Größe der Vorrichtung nicht unterschritten werden kann. Sie erlauben auch nicht, daß die Auflagefläche eine große Abmessung aufweist, was die Analyse großflächiger Objekte, z. B. menschlicher Hände, unmöglich macht.

Ferner sind reine Vorrichtungen zur Lageerkennung bekannt geworden. Ein solcher Kontaktfühler ist in der Zusammenfassung der JP - A - 2 195 289 beschrieben. Dieser besteht aus einem als Wellenleiter dienenden Rohr, an dessen unverschlossenem Rohrende ein als Sender bzw. Empfänger dienender Ultraschallwandler vorgesehen ist, woran ein Übertragungs und Zeitmeßschaltkreis sowie ein Distranzrechner angeschlossen ist. Abhängig von dem mechanischen Druck auf den Wellenleiter bestimmt sich die Reflexion der Ultraschallwellen und damit errechnet sich der Druckpunkt. Eine Strukturanalyse kann mit diesem Gerät der vorgenannten Anmeldung nicht durchgeführt werden.

Es sind auch noch andere Vorrichtungen bekannt, die die Lage des Objektes, wie beispielsweise die Lage eines Fingers auf einer Fläche erkennen können, z. B. eines Displays (s. auch EP 0 557 446 und 0 523 200). Diese Geräte sind aber nicht in der Lage, die Struktur des Objektes, z. B. des Fingers, zu analysieren, da sie eine viel zu geringe Auflösung haben und auch nicht nicht die Aufgabe gestellt war. Auch ist die Funktionsweise eine andere, da diese Geräte nur die Dämpfung der Ultraschallwellen, die durch das Objekt hervorgerufen wird nutzen, woraus prinzipiell die Struktur nicht ablesbar ist.

Die der Erfindung zugrundliegende Aufgabe besteht in dem Vorschlag eines Verfahrens sowie einer Vorrichtung zur Analyse von Strukturen der Oberflächen sowie der oberflächennahen Bereiche und/oder zur der Lage von Objekten, die einen gedrängteren Wellenverlauf zulassen und eine flache und kompakte kleine Ausführung ermöglicht. Die Vorrichtung soll konstruktiv einen geringeren technischen Aufwand bei gleichguten Analyseergebnissen aufweisen.

Die gestellte Aufgabe wird erfindungsgemäß durch die im kennzeichnenden Teil der Ansprüche 1 und 2 enthaltenen Merkmale gelöst.

Überraschernderweise hat sich nämlich aufgrund von Experimenten gezeigt, daß auch auf diese Weise geführte Ultraschallwellen eindeutige und wiederholbare Analysen der Struktur und/oder der Lage der Objekte liefern. Dabei wird von einer Platte beliebiger Abmessungen ausgegangen, wie in Anspruch 2 ausgeführt, an der seitlich angeordnete Empfänger oder Sender und Empfänger angebracht sind. Ein Sender oder Empfänger kann auch unterhalb der Platte vorgesehen sein. Die Beschallung erfolgt erfindungsgemäß mit Scherwellen (SH-Wellen), also Wellen die horizontal polarisiert sind. Als Material der Platte wird Glas, Metall oder Kristalle mit geringer Dämpfung vorgeschlagen. Selbstverständlich können auch Wandler an den Plattenseiten vorgesehen sein, die gleichzeitig Sender und Empfänger sind, da auch bei seitlich von der Auflageplatte erzeugten und/oder empfangenen Ultraschallwellen, die sich entlang der Plattenoberfläche geführt sind, eine wiederholbare und starke Reflexion und/oder Streuung an der Struktur der an der Platte anliegenden Schicht erfolgt.

Mindestens eine Oberfläche der Platte bildet die Begrenzung, die die Welle zweidimensional führt. Es ist dabei gleichgültig, ob eine geführte oder normale Welle gesendet wird, jedoch wird die vom Objekt reflektierte und/oder rückgestreute Welle durch die Plattengrenze oder auch -grenzen zweidimensional geführt.

Die Platte kann auch mit einem oder mehreren Kanälen ausgestattet sein, wodurch eine eindimensionale Welle erhalten und am Ende des Kanals einem Empfänger zugeleitet wird. Die Kanäle sind durch Veränderung der Plattenstuktur, z. B. der Dichte, machbar. Auch können sie durch die Vewendung zweier verschiedener aneinandergrenzender Materialien gebildet sein und zwar in ähnlicher Weise, wie es bei optischen Wellenleitern geschieht, wobei der Kern der Leitung und die Umhüllung des Kerns aus unterschiedlichen Materlien bestehen können.

Die Stärke der Platte beträgt 1/3 bis 3 mm und ist von der Wellenlänge abhängig. Es hat sich nämlich gezeigt. daß die günstigsten Abmessungen der Plattendicke in einem Bereich liegt, der 5 - 10 x größer ist als die Wellenlänge der gesendeten Ultraschallwelle. Falls in der Platte Kanäle vorgesehen sind, ist deren Druchmesser ebenfalls 5 - 10 x größer zu ahlten als die Wellenlänge der verwendeten Ultraschallwelle. Die eindimensionale Führung besitzt darüber hinaus den Vorteil, daß die Signale nacheinander ankommen und auch nacheinander erfaßt werden können. Es ist auch möglich, dickere Platten zu verwenden.

Die erfindungsgemäße Vorrichtung bietet gegenüber den bekannten Geräten den Vorteil einer flachen Bauweise bei wiederholbaren und genauen Analysedaten. Darüber hinaus ist die Bauweise stark vereinfacht, da ein mit Flüssigkeit gefülltes Gehäuse entfallen kann. Die Fortpflanzung der Ultraschallwellen ist innerhalb des plattenförmigen Festkörpers garantiert, so daß sich zusätzliche Maßnahmen erübrigen. Diese Tatsache ermöglicht auch kleine Geräte z. B. solche, die die Größe einer Taste haben. Darüberhinaus ist es möglich, auch Vorrichtungen mit größeren Abmessungen herzustellen, die sowohl die Struktur des Objektes als auch dessen Lage analysieren können, was z. B. zur Steuerung von Computern vorteilhaft sein kann, ähnlich wie bei den bekannten Berührungsfeldern (touch panels) und die Erfassung größerer Objekte wie z. B. ganzer Hände ermöglicht.

Weitere Einzelheiten der Erfindung sind der beigefügten Zeichnung zu entnehmen. Dabei zeigen:
- Fig. 1: eine Seitenansicht der Vorrichtung in schematischer Darstellung,
- Fig. 2: eine Draufsicht auf die in Fig. 1 abegebildete Ausführung,
- Fig. 3: die Anordnung von einer aus eindimensionalen Wellenleitern gefertigten Platte,
- Fig. 4: den Kanalverlauf in einer Platte,
- Fig. 5: die Anordnung von zwei Kanälen in Spiralform in einer Platte.

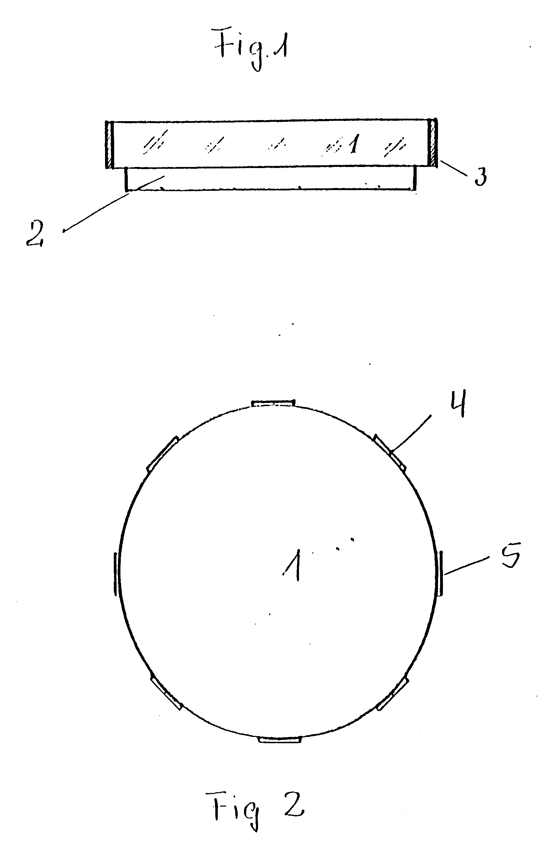

Fig. 1 zeigt im dargestellten Beispiel eine runde Platte 1 mit am Rand angeordneten Wandlern 3 und einem unterhalb der Platte angeordneten Wardler 2. Bei der in Fig. 2 in Draufsicht dargestellten Ausführung ist erkennbar, daß die Wandler 4 und 5 rund um die Platte angeordnet sind. Die Wandler können sowohl als Sender als auch als Empfänger eingesetzt sein. Der optionelle untere Wandler 2 ist in Fig. 2 nicht ersichtlich.

Bei dieser in Fig. 1 und 2 schematisch dargestellten Vorrichtung werden Scherwellen im Ultraschallbereich genutzt, die sich in der Platte (dem Festkörper) entlang einer oder auch beider Grenzen fortpflanzen.

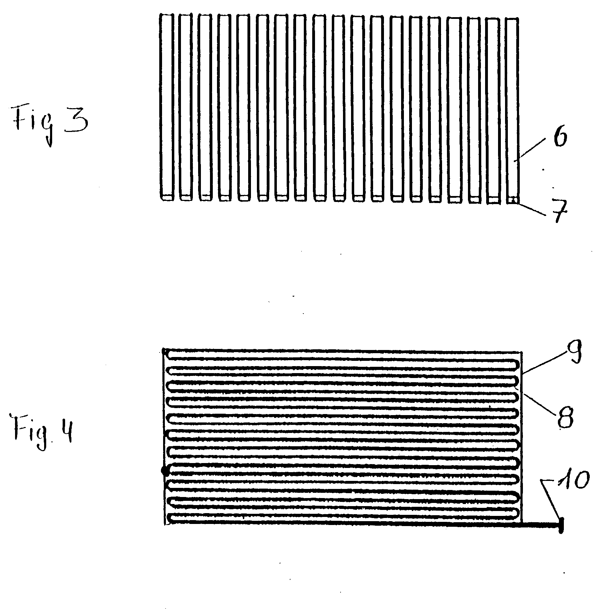

Es handelt sich also um Geführte Wellen, d. h. solche, die sich nicht in allen Dimensionen ausbreiten können. In der Platte des Ausführungsbeispiels der Fig. 1 und 2 werden zweidimensionale Wellen erzeugt, während Platten mit Kanälen beliebiger Genese, wie beispielsweise in den Fig. 3, 4 und 5, Wellen mit eindimensionaler Ausbreitung aufweisen.

Ähnlich wie bei den bekannten Vorrichtungen, die Volumenwellen nutzen, werden die elektrischen Signale von den Empfangswandlern über einen Verstärker und evtl. einen Detektor mit Hilfe eines Digital-Analog-Wandlers einem Computer zugeführt, der aus ihnen die Information über die Beschaffenheit und/oder Lage der analysierten Schicht liefert.

Die Analysemethode, die bei der Verwendung von zweidimensionalen Wellen verwendet wird, entspricht der, die bei den anfänglich erwähnten Volumengeräten benutzt wird, z. B. die Radontransformation. Die Version mit den Kanälen bietet darüber hinaus eine einfachere Möglichkeit, denn es ist nur eine Zusammenfassung des Signals bzw.. der Signale notwendig, die dem Kanalverlauf entspricht.

Diese Verfahren sind naturgemäß nur dann notwendig, wenn die Wiedergabe des Bildes der zu untersuchenden Schicht gewünscht wird. Falls andere Ziele verfolgt werden, können auch andere Methoden der Signalverarbeitung eingesetzt werden, z. B. ein einfacher Signalvergleich, andere Transformationsarten usw..

Die erfindungsgemäße flache Lösung der Vorrichtung bietet darüber hinaus eine einfache Möglichkeit der Struktur- und der damit verbundenen Lageerkennung der an der Platte anliegenden Schichten des Objektes, da die Platte auch eine eindimensionale Wellenführung erlaubt. Der Vorteil einer Analyse mit eindimensionaler Wellenführung besteht darin, daß sie eine zeilenmässige Abtastung ermöglicht.

Zur Herstellung von eindimensionalen Wellen besteht die Platte, wie in Fig. 3 gezeigt, aus nebeneinander verlauffenden parallelen Kanälen 6, deren Seitenwände mit benachbarten Kanälen verbunden sind. Die Kanäle 6 haben an ihren Enden Wandler, die nacheinander senden und die empfangenen Ultraschallwellen in elektrische Signale transformieren.

In Fig. 4 ist ein Kanal 8 gezeigt, der die gesamte Fläche einer Platte 9 bedeckt und der die Information des beschallten Objektes an den Wandler 10 weiterleitet.

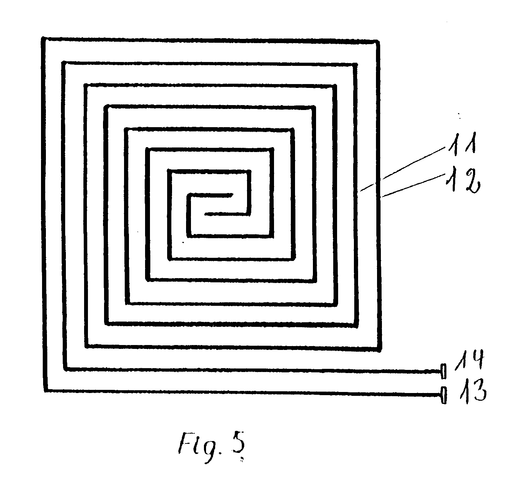

In Fig. 5 sind zwei parallele Kanäle 11 und 12 dargesellt, die eckig-spiralförmig verlaufen und die rückgestreuten Ultraschallwellen aufnehmen und zu den Wandlern 13 und 14 leiten, die die daraus ermittelten Signale an den Computer weitergeben.

Die gezeigten Verlaufsformen der Kanäle sind nur beispielhaft angegeben, denn jede Verlaufsform ist geeignet, die die rückgestreuten Wellen einmodal an einen Wandler weitergibt.

## Patentansprüche

1. Verfahren zur Analyse von Oberflächenstrukturen und oberflächennahen Strukturen von Objekten und/oder zur Lageerkennung von Objekten mittels Ultraschallwellen mit einem Ultraschallsender und Ultraschallempfänger sowie einer als Auflagefläche für das Objekt dienenden Platte, **dadurch gekennzeichnet**,
daß das auf einem die Platte bildenden Festkörper (1) aufliegende Objekt von horizontal polarisierten Ultraschallwellen sogenannten Scherwellen (SH-Wellen) beschallt wird, wobei die vom Objekt reflektierten und/oder gestreuten Wellen entlang dem Festkörper geführt und Wandlern (3, 4, 5) zur Analyse zugeführt werden.

2. Vorrichtung zur Analyse von Oberflächenstrukturen und oberflächennahen Objekten und/oder zur Lageerkennung von Objekten mittels Ultraschallwellen mit einem Ultraschallsender und Ultraschallempfänger sowie einer als Auflagefläche für das Objekt dienenden Platte,
**dadurch gekennzeichnet**,
daß als Auflagefläche eine zur Führung ein- oder zwei-dimensionaler Wellen geeigneter plattenförmiger Festkörper (1) verwendet wird, dem seitlich Ultraschallsender (4, 5) zur Erzeugung von Scherwellen und Empfänger (3) zu deren Empfang zugeordnet sind, wobei das Senden und Empfangen von einem Wandler ausführbar ist.

3. Vorrichtung nach Anspruch 2,
**dadurch gekennzeichnet**,
daß der plattenförmige Festkörper (1) aus Glas, verschiedenen Metallen oder Kristallen mit geringer Dämpfung besteht.

4. Vorrichtung nach Anspruch 2,
**dadurch gekennzeichnet**,
daß zur Führung der am Objekt reflektierten und/oder zurückgestreuten Wellen Wellenleiter (6, 8, 11, 12) in die Platte (1) vorgesehen sind.

5. Vorrichtung nach Anspruch 4,
**dadurch gekennzeichnet**,
daß als Wellenleiter ein Kanal (8) oder mehrere Kanäle (6, 11, 12) vorgesehen sind.

6. Vorrichtung nach Anspruch 5,
**dadurch gekennzeichnet**,
daß die Kanäle durch Veränderung der Plattenstruktur (Dichte) hergestellt werden.

7. Vorrichtung nach Anspruch 5,
**dadurch gekennzeichnet**,
daß die Kanäle aus zwei Materialien gebildet sind.

8. Vorrichtung nach Anspruch 5,
**dadurch gekennzeichnet**,
daß der Kanal aus einer Leitung besteht, deren Kern aus einem anderen Material als ihre Umhüllung hergestellt ist.

9. Vorrichtung nach Anspruch 2,
**dadurch gekennzeichnet**,
daß der Empfänger (3) seitlich an der Platte (1), jedoch der Sender (2) unterhalb der Platte angeordnet ist.

10. Vorrichtung nach Anspruch 2,
**dadurch gekennzeichnet,**
daß die Plattenstärke abhängig von der Wellenlänge der Ultraschallwelle bemessen ist.

11. Vorrichtung nach einem oder mehreren der Ansprüche 2 - 10,
**dadurch gekennzeichnet**,
daß mehrere nebeneinander angeordnete Kanäle (6) in der Platte vorgesehen sind oder diese bilden, an deren Enden sich Empfänger (7) befinden, die nach und nach abgefragt werden.

12. Vorrichtung nach einem oder mehreren der Ansprüche 5 - 8, 11,
**dadurch gekennzeichnet**,
daß der Kanal oder die Kanäle (11, 12) eckig-spiralförmig oder rund-spiralförmig gewunden sind.

13. Vorrichtung nach Anspruch 12,
**dadurch gekennzeichnet**,
daß diese Windungen in zwei Kanäle aufgeteilt sind.

14. Vorrichtung nach einem oder mehreren der Ansprüche 5 - 8, 11 - 13,
**dadurch gekennzeichnet**,
daß der Kanal (8) hin- und hergehend gewunden ist, wobei die Kanalteile parallel zueinander verlaufen.

15. Vorrichtung nach Anspruch 2,
**dadurch gekennzeichnet**,
daß die Platte gekrümmt ist.

16. Vorrichtung nach Anspruch 4,
**dadurch gekennzeichnet**,
daß der Durchmesser der Wellenleiter 5-10 x größer als die Wellenlänge der Ultraschallwellen ist.

17. Vorrichtung nach einem oder mehreren der Ansprüche 2 - 16,
**dadurch gekennzeichnet**,
daß die elektrischen Signale von den Empfangswandlern mitteles eines Detektors und/oder eines Analog-Digital-Wandlers einem Computer zur weiteren Bearbeitung zugeführt werden, der die Information über die Lage und/oder Beschaffenheit der analysierten Schicht des Objektes unter Verwendung einer Radontransformation und/oder einer Zeilenzusammensetzung liefert.

## Claims

1. Process for analyzing surface structures and near-surface structures of objects, and/or for recognizing the position of objects by ultrasonic waves, involving an ultrasonic emitter and an ultrasonic receiver and a plate serving as the support area for the object,
characterized in that
the object placed on a solid body (1) forming the plate is exposed to horizontally polarized ultrasonic waves called shear waves (SH waves), and that the waves reflected and/or backscattered by the object are guided along the solid body to the transmitters (3,4,5) for analysis.

2. Device for analyzing surface structures and near-surface structures, and/or for recognizing the position of objects by ultrasonic waves, involving an ultrasonic emitter and an ultrasonic receiver and a plate serving as the support area for the object,
characterized in that
a solid body (1) having the shape of a plate and being suitable for guiding one-dimensional or two-dimensional waves is used as the support area, and that ultrasonic emitters (4,5) for generating shear waves and a receiver (3) for receiving said waves are provided on the sides of said plate, so that emitting and receiving can be carried out by a transmitter.

3. Device according to claim 2,
characterized in that
the plate-shaped solid body (1) consists of low-damping glass, various metals, or crystals.

4. Device according to Claim 2
characterized in that
waveguides (5,8,11,12) are provided in plate (1) for guiding the waves reflected and/or back-scattered from the object.

5. Device according to claim 4
characterized in that
one channel (8) or several channels (6,1,12) are provided as waveguides.

6. Device according to Claim 5
characterized in that
the channels are formed by modifying the plate structure (density).

7. Device according to claim 5
characterized in that the channels are formed by two materials.

8. Device according to Claim 5
characterized in that
the channel is formed by a line the core of which is made of a material different from that of the sheath.

9. Device according to Claim 2
characterized in that
the receiver (3) is placed on the side of plate (1), while the emitter (2) is placed below the plate.

10. Device according to claim 2
characterized in that
the thickness of the plate is selected depending on the wavelength of the ultrasonic wave.

11. Device according to one Claim or to several of the Claims 2 - 10,
characterized in that
several channels (6) arranged side by side are provided in the plate or form the latter, and that receivers (7) provided at the ends of the channels are provided and are sequentially scanned.

12. Device according to one Claim or to several of of the Claims 5 - 8,
characterized in that
the channel or the channels (11,12) form spiral windings of square or circular thread.

13. Device according to Claim 12,
characterized in that
these windings are partitioned to form two channels.

14. Device according to one Claim or to several of the Claims 5 - 13,
characterized in that
channel (8) is winding to-and-fro, and that the parts of the channel are parallel to each other.

15. Device according to Claim 2
characterized in that
the plate is curved.

16. Device according to Claim 4
characterized in that
the diameter of the waveguides exceeds the wavelength of the ultrasonic waves by a factor of 5 to 10.

17. Device according to one Claim or to several of the Claims 2 - 16,
characterized in that
the electrical signals are passed on by the receiving transmitters via a detector and/or an analog to digital converter to a computer for further processing, said computer supplying information concerning the position and/or properties of the analyzed layer of the object, using Radon's transformation and/or a line composition.

## Revendications

1. Procédé pour l'analyse de structures de surface et près de surface d'objets, et/ou pour la reconnaissance de la position d'objets à l'aide d'ondes ultrasonores, avec un émetteur et un récepteur d'ultra-sons et une plaque qui sert de surface d'appui pour l'objet,
caractérisé en ce que
l'objet placé sur le solide (1) qui forme la plaque est exposé à l'action d'ondes ultrasonores horizontalement polarisées, dites ondes de cisaillement (ondes S), les ondes réfléchies et/ou rétrodiffusées par l'objet étant guidées le long du solide à des transducteurs (3,4,5) pour l'analyse.

2. Dispositif pour l'analyse de la structure de surface ou près de surface d'objets et/ou pour la reconnaissance de la position d'objets à l'aide d'ondes ultrasonores, avec un émetteur et un récepteur d'ultra-sons et une plaque qui sert de surface d'appui pour l'objet,
caractérisé en ce qu'un
solide (1) en forme de plaque capable de guider des ondes monodimensionnelles ou bidimensionnelles est utilisé comme surface d'appui, et que des émetteurs d'ultra-sons (4,5) pour la génération d'ondes de cisaillement et récepteurs (3) pour leur réception sont placés à côté du dit solide (1) en forme de plaque, l'émission et la réception étant effectuées à l'aide d'un convertisseur.

3. Dispositif selon Revendication 2,
caractérisé en ce que
le solide (1) en forme de plaque est composé de verre, divers métaux ou cristaux caractérisés par un affaiblissement réduit.

4. Dispositif selon Revendication 2
caractérisé en ce que
des guides d'ondes (6,8,11,12) dans la plaque (1) sont disposés pour guider les ondes réfléchies et/ou rétrodiffusées par l'objet.

5. Dispositif selon Revendication 4,
caractérisé en ce qu'un
conduit (8) ou plusieurs conduits (6,11,12) sont prévus comme guides d'ondes.

6. Dispositif selon Revendication 5,
caractérisé en ce que
les conduits sont obtenus par modification de la structure (densité) de la plaque.

7. Dispositif selon Revendication 5,
caractérisé en ce que
les conduits sont formés de deux matériaux.

8. Dispositif selon Revendication 5
caractérisé en ce que
le conduit est formé par une ligne dont le noyau est composé d'un matériau différent de celui de la gaine.

9. Dispositif selon Revendication 2,
caractérisé en ce que
le récepteur (3) se trouve à côté de la plaque (1), tandis que l'émetteur est placé au dessous de la plaque.

10. Dispositif selon Revendication 2,
caractérisé en ce que
l'épaisseur de la plaque est sélectionnée en fonction de la longueur d'onde de l'onde ultrasonore.

11. Dispositif selon une Revendication ou plusieurs des Revendications 2 - 10,
caractérisé en ce que
plusieurs conduits (6), l'un à côté de l'autre, sont prévus dans la plaque ou forment la plaque, et que des récepteurs (7) qui se trouvent aux extrémités des conduits sont successivement balayés.

12. Dispositif selon une Revendication ou plusieurs des Revendications 5 - 8, 11
caractérisé en ce que
le conduit ou les conduits (11,12) sont tordus en forme de spirale quadrangulaire ou spirale circulaire.

13. Dispositif selon Revendication 12,
caractérisé en ce que
ces spires sont partagées en deux conduits.

14. Dispositif selon une Revendication ou plusieurs des Revendications 5 -8, 11 - 13
caractérisé en ce que
le conduit (8) forme une spire va-et-vient, les parties du conduit étant parallèles.

15. Dispositif selon Revendication 2
caractérisé en ce que
la plaque est courbée.

16. Dispositif selon Revendication 4
caractérisé en ce que
le diamètre des guides d'ondes correspond à 5 - 10 fois la longeur d'onde des ondes ultrasonores.

17. Dispositif selon une Revendication ou plusieures des Revendications 2 - 16
caractérisé en ce que
les signaux électriques sont alimentés par les convertisseurs récepteurs à l'aide d'un détecteur et/ou un convertisseur analoquique-numérique, à un ordinateur pour le traitement ultérieur, l'ordinateur fournissant des informations concernant la position et/ou les caractéristiques de la couche analysée de l'objet à l'aide d'une transformation de Radon et/ou une composition de lignes.
